# EUROPÄISCHE PATENTSCHRIFT

(11) **EP 2 591 910 B1**
(45) Veröffentlichungstag und Bekanntmachung des Hinweises auf die Patenterteilung: **31.12.2014**
(21) Anmeldenummer: 12191538.3
(22) Anmeldetag: 07.11.2012
(51) Int. Cl.: B29C 65/16, B23K 26/06

(54) **Vorrichtung zum Verbinden zweier Werkstückteile über eine Schweißnaht mittels Durchstrahlschweißen**
Device for connecting two workpiece parts by means of a welded seam using transmission welding
Dispositif de liaison de deux pièces le long d'un cordon de soudure au moyen d'un soudage par rayonnement transmis

(30) Priorität: 10.11.2011 DE 102011055203
(43) Veröffentlichungstag der Anmeldung: 15.05.2013
(73) Patentinhaber: JENOPTIK Automatisierungstechnik GmbH, 07745 Jena (DE); REHAU AG + Co, 95111 Rehau (DE)
(72) Erfinder: Stein, Helmut, 95028 Hof (DE); Wollmann, Werner, 07747 Jena (DE); Krzyzaniak, Norbert, 07747 Jena (DE); Hähnel, Gerd, 08525 Plauen (DE)
(74) Vertreter: Schaller, Renate

(56) Entgegenhaltungen:
- EP-B1- 0 997 261
- DE-A1- 10 339 636
- DE-A1-102010 007 717

## Beschreibung

Die Erfindung betrifft eine Vorrichtung zum Verbinden von bevorzugt großflächig ausgedehnten Werkstückteilen über einen Fügebereich (hier wenigstens zweidimensionale Schweißnaht) mittels Durchstrahlschweißen.

Grundsätzlich werden zur Durchführung des Durchstrahlschweißens zwei miteinander zu verbindende Werkstückteile so aneinandergefügt, dass sich diese entlang eines Kontaktbereiches unmittelbar berühren. Innerhalb des Kontaktbereiches liegt der Fügebereich. Das erste Werkstückteil ist für die Laserstrahlen transmittierend und einer Laserquelle zugewandt. Das zweite Werkstückteil ist für die Laserstrahlen absorbierend. Die Laserstrahlen durchdringen das erste Werkstückteil, treffen auf die oberen Schichten des zweiten Werkstückteils, werden dort absorbiert und in Wärmeenergie umgewandelt. Die oberen Schichten des zweiten Werkstückteils schmelzen auf, wobei es durch Wärmeleitung auch zu einer Aufschmelzung der angrenzenden Schichten des ersten Werkstückteils und zu einer stoffschlüssigen Verbindung beider Werkstückteile zu einem Werkstück kommt.

Sollen beide Werkstückteile entlang eines Fügebereichs miteinander verbunden werden, der nicht gleich dem Kontaktbereich ist, so muss das Auftreffen der Laserstrahlen auf den Fügebereich begrenzt werden, um ein Verschweißen auch anderer Bereiche innerhalb des Kontaktbereiches zu vermeiden.

Eine Möglichkeit hierfür ist die Verwendung eines punkt- oder linienförmig auf den Fügebereich zweier Werkstücke fokussierten Laserstrahls, wie dies in der Patentschrift EP 1 405 713 B1 beschrieben ist. Eine den Laserstrahl fokussierende, als Rolle oder Kugel ausgebildete und auf der Oberfläche des transmittierenden Werkstückes aufsetzende optische Linse, wird synchron mit dem Laserstrahl entlang des Fügebereichs bewegt. Dabei werden die zu verschweißenden Werkstückteile durch die Linse lokal zusammengepresst und entlang des Fügebereichs präzise miteinander verbunden. Die Verbindung größerer Flächen stellt sich allerdings als sehr zeitintensiv dar.

In der Patentschrift EP 997 261 B9 ist ein weiteres Verfahren offenbart, mit dem zwei Werkstückteile mittels Durchstrahlschweißen in einem Fügebereich miteinander verbunden werden. Dabei wird die freie Oberfläche eines transmittierenden Werkstückteils von einer laserlichtundurchlässigen Maske abgedeckt und die Maske durch Laserstrahlen in Form eines Laservorhangs beaufschlagt, der durch Kollimation und Fokussierung von Laserstrahlen einer oder mehrerer Laserquellen erzeugt wird. Die Maske ist korrespondierend zum Fügebereich durchbrochen, womit diejenigen Bereiche des Kontaktbereiches abgeschattet werden, die nicht miteinander verbunden werden sollen. Die durch die Maske abgeschatteten Laserstrahlen werden reflektiert.

Die Laserstrahlen treffen entlang einer Laserlinie auf der Oberfläche des absorbierenden Werkstückteils auf, wobei die Laserlinie durch die Gestaltung der Maske in Linienabschnitte untergliedert wird. Ist die Maske korrespondierend zu einem Linienabschnitt durchbrochen, so wird der Linienabschnitt mit der vollen Leistung der Laserstrahlen beleuchtet; bei nicht durchbrochener Maske bleibt der betreffende Linienabschnitt unbeleuchtet. Werkstückteile und Laserlinie werden relativ zueinander bewegt, womit die Laserlinie über den Fügebereich geführt wird. Dabei wird die Laserlinie ständig an die Lage und die Ausdehnung des zu einem Zeitpunkt überstrichenen Fügebereichs angepasst. Die Ausdehnung des Laservorhangs, und damit die maximale Ausdehnung der Laserlinie, kann durch eine Änderung des Arbeitsabstandes von Laserquelle und Maske eingestellt werden. Zudem kann die Energiedichte der Laserlinie dadurch angepasst werden, dass die Leistung der Laserstrahlen verändert wird.

Es ist energetisch ungünstig, dass ein Teil der emittierten Laserstrahlen nicht genutzt und außerdem mehr oder minder diffus reflektiert wird, was eine erhöhte thermische Belastung der Vorrichtung bzw. der Laserquelle bedeutet und zusätzliche Arbeitsschutzmaßnahmen erforderlich macht. Außerdem sind keine Maßnahmen vorgesehen, mit denen Einfluss auf die Leistungsdichteverteilung der Laserstrahlen auf der Werkstückoberfläche genommen werden kann.

Eine Vorrichtung bei welcher diese Nachteile behoben werden, ist mit der Offenlegungsschrift DE 100 07 391 A1 veröffentlicht. Mit der hier vorgestellten Vorrichtung kann sowohl auf die Leistungsdichteverteilung als auch auf die Form des auf dem Werkstück erzeugten Brennflecks eines Laserstrahls Einfluss genommen werden.

Hierzu wird ein flächiger und ortsauflösender Strahlmodulator zur Generierung einer vorgebbaren Leistungsdichteverteilung zwischen Laserstrahlquelle und Werkstück angeordnet. Die durch den Strahlmodulator erreichte Ortsauflösung wird durch eine in einer Ebene angeordnete Matrix aus einzeln ansteuerbaren Zellen erreicht, welche senkrecht zu dieser Ebene im Strahlengang der Laserstrahlquelle angeordnet ist. Je nach Anzahl dieser Zellen wird ein von der Laserstrahlquelle kommender Laserstrahl in einzelne Teilstrahlen zerteilt. Mit jeder dieser voneinander unabhängigen Zellen kann die Transmission des entsprechenden Teilstrahls beeinflusst werden. Somit kann im Bereich der Matrix die Leistungsdichteverteilung über den Kanalquerschnitt des gesamten Laserstrahls gezielt eingestellt werden, bevor es auf das Werkstück trifft.

Zur Modulierung der Teilstrahlen weisen die Zellen entweder einen beweglichen Mikrospiegel oder einen Mikropolarisator auf oder sind als Flüssigkristallzellen ausgeführt. Mit diesen Einrichtungen kann die Transmission jeder Zelle stufenlos von maximalem Durchlass bis zur vollständigen Strahlunterbrechung eingestellt werden. Daraus ergeben sich vielfältige Möglichkeiten bei der sequentiellen oder simultanen Materialbearbeitung. In einer Ausführung der Vorrichtung erfolgt beispielsweise eine simultane Bearbeitung des Werkstücks auf einer vom Strahlmodulator begrenzten Fläche dadurch, dass zeitgleich nur die Teilstrahlen freigegeben werden, die zur Bearbeitung einer flächig auf dem Werkstück angeordneten Kontur erforderlich sind. Durch eine Abstufung der Transmission der einzelnen freigegebenen Zellen untereinander erfolgt gleichzeitig die Einstellung einer gleichmäßigen Leistungsdichteverteilung im Verlauf der gesamten Kontur.

Da der Strahlmodulator direkt im Strahlengang angeordnet ist, müssen die zu seinem Aufbau verwendeten Materialien eine möglichst hohe Zerstörungsschwelle aufweisen. Um zu verhindern, dass ein auf den Strahlmodulator auftreffender Laserstrahl, der in der Regel Inhomogenitäten in seinem Strahlprofil aufweist die punktuell bereits nahe der Zerstörschwelle liegen können und um den Dynamikbereich des Strahlmodulators zu erhöhen, sind zusätzliche Maßnahmen nötig, die den Laserstrahl bereits vor dem Auftreffen auf den Strahlmodulator homogenisieren. Die hohen Ansprüche an die Materialeigenschaften und an den funktionellen Aufbau des Strahlmodulators, der Einsatz von zusätzlichen Optiken zum Homogenisieren des auf den Strahlmodulator treffenden Laserstrahls und die Erstellung einer erforderlichen Steuerung lassen einen nicht unerheblichen Aufwand bei der Herstellung der Vorrichtung vermuten. Außerdem ist das hier zur Anwendung kommende Prinzip nur bei der Bearbeitung kleinerer Werkstücke sinnvoll anwendbar.

Bei einer in der Offenlegungsschrift DE 10 2010 007 717 A1 offenbarten Vorrichtung wird eine deutlich einfachere Möglichkeit beschrieben, mit der die Verbindung zweier flächiger Werkstückteile über einen strukturierten und großflächig ausgedehnten Fügebereich mittels einer aus mehreren, einzeln ansteuerbaren Einzelstrahlern bestehenden, linienförmigen Laserstrahlquelle, ohne Verwendung einer Maske erfolgen kann.

Die Vorrichtung umfasst einen Träger (hier: Aufnahme) der dazu ausgelegt ist zwei in x-y-Richtung flächig ausgedehnte Werkstückteile zueinander zu positionieren, ein auf die Aufnahme gerichtetes, in x-Richtung ausgerichtetes Linienarray (hier: Laserstrahlquelle, bestehend aus einer Vielzahl von einzeln ansteuerbaren Einzelstrahlern, bevorzugt Laserstrahlemittern, die gemeinsam ein Linienarray bilden), eine Einrichtung zum relativen Transportieren des Linienarrays zur Aufnahme in y-Richtung sowie eine Steuerung zum ortsaufgelösten Betreiben der Einzelstrahler. Gemäß einem Ausführungsbeispiel besteht das Linienarray aus Laserdioden, die nebeneinander in Richtung ihrer slow-axis angeordnet sind und deren Laserstrahl in fast-axis Richtung durch eine in Abstrahlrichtung, die der z-Richtung entspricht, vorgeordnete Zylinderlinse kollimiert wird.

Das den Fügebereich in einer Ausdehnungsrichtung komplett überspannende Linienarray erzeugt einen Laservorhang, der gegenüber den Werkstückteilen eine Relativbewegung vollzieht und dabei den kompletten Fügebereich in seiner zweiten Ausdehnungsrichtung überstreicht. Über eine gezielte Ansteuerung der einzelnen Laserdioden während der Relativbewegung wird ausschließlich der Fügebereich mit einer entsprechenden Laserleistung beaufschlagt. Fügefreie Bereiche bleiben von der Laserleistung unbeeinflusst und brauchen daher nicht maskiert zu werden.

Damit konnte eine energetisch vergleichsweise günstige Lösung zum Schweißen größerer Werkstücke gefunden werden. Die Laserstrahlen treffen jedoch unbeeinflusst auf die Werkstückteile auf, weshalb diese in der Regel eine inhomogene Leistungsdichteverteilung in Form eines Gaußprofils aufweisen. Dadurch ist es nicht möglich scharf konturierte Fügebereiche mit einer homogenen Schmelze, z. B. in Form von schmalen, dichten Schweißnähten zu erzeugen. Ein Anspruch an einen scharf begrenzten Fügebereich wird in der Regel dann gestellt, wenn der Fügebereich visuell wahrnehmbar ist und das Erscheinungsbild eines Werkstückes mitbestimmt. Ein Anspruch an eine homogene Schmelze wird dann gestellt, wenn die Werkstückteile abgedichtet miteinander verbunden werden müssen.

Der Erfindung liegt die Aufgabe zugrunde eine Vorrichtung zum Durchstrahlschweißen bevorzugt großflächig ausgedehnter Werkstückteile zu schaffen, mit der reproduzierbar eine wenigstens zweidimensional ausgedehnte Schweißnaht, insbesondere auch eine ringförmig geschlossene Schweißnaht, mit einer scharfen Begrenzung und einer homogenen Schmelze hergestellt werden kann. Die Vorrichtung soll darüber hinaus einen einfachen Aufbau aufweisen und eine schnelle Durchführung des Schweißverfahrens ermöglichen.

Wünschenswert wäre eine einfache Vorrichtung in der Art, wie sie z. B. in der Offenlegungsschrift DE 10 2009 053 261 A1 zum Punktschweißen beschrieben ist, bei welcher eine Homogenisierung der auftreffenden Strahlleistung durch die Durchmischung der Laserstrahlen durch Mehrfachreflexion in einem sogenannten Strahlrohr erreicht wird. Diese Vorrichtung ist jedoch ausschließlich zum Schweißen punktförmiger Verbindungsstellen geeignet.

Die Erfindung soll nachfolgend anhand von Ausführungsbeispielen näher erläutert werden. In den dazugehörigen Zeichnungen zeigen:
- Fig. 1: eine Übersicht der wesentlichen Bestandteile der Vorrichtung,
- Fig. 2: ein erstes Ausführungsbeispiel für einen Aufbau des Homogenisierers und
- Fig. 3: eine Darstellung verschiedener Ausführungen der Reflexionskanäle.

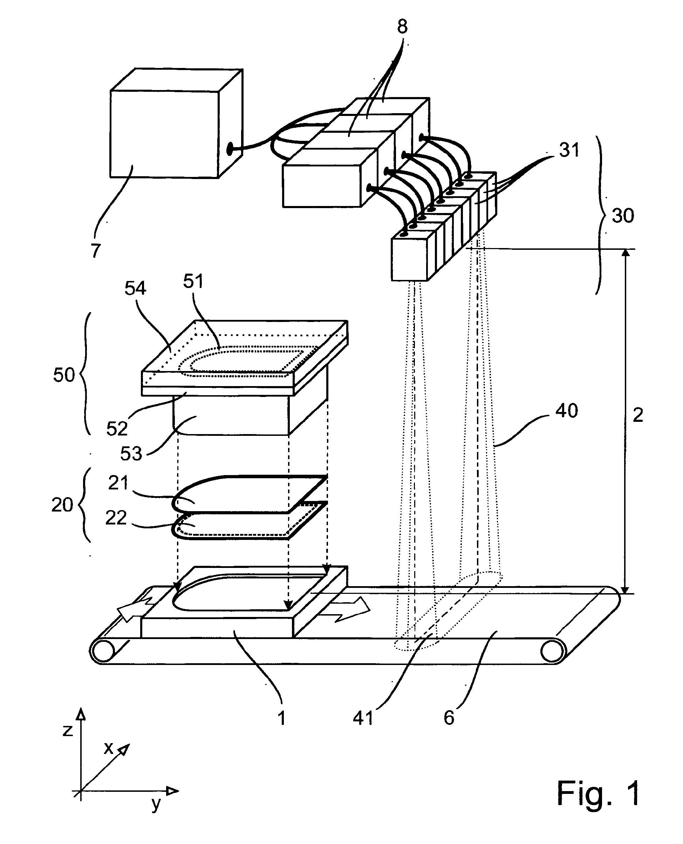

Gemäß einem ersten Ausführungsbeispiel, dargestellt in Fig. 1, weist die Vorrichtung im wesentlichen eine Speicher- und Steuereinheit 7, eine Laserstrahlquelle 30, einen Homogenisierer 50, eine Aufnahme 1 und eine Transporteinrichtung 6 auf.

Die Aufnahme 1 ist so dimensioniert, dass in ihr ein in x-y-Richtung flächig ausgedehntes Werkstück 20 in x-, y- und z-Richtung eines kartesischen Koordinatensystems positionierbar ist. Das Werkstück 20 besteht aus einem transmittierenden Werkstückteil 21 sowie einem absorbierenden Werkstückteil 22 und ist so in der Aufnahme 1 positioniert, dass das transmittierende Werkstückteil 21 der Laserstrahlquelle 30 zugewandt ist. Zwischen der Laserstrahlquelle 30 und der Aufnahme 1 ist der, das Werkstück 20 vom Wirkbereich 41 der Laserstrahlquelle 30 abschirmende, nicht transparente Homogenisierer 50 angeordnet. Dieser weist einen Träger 52 auf, in dem ein in z-Richtung durchgängiger Reflexionskanal 51 vorhanden ist. Der Reflexionskanal 51 weist in x-y-Richtung einen von Kanalwandflächen 53 begrenzten Kanalquerschnitt QS auf, welcher entsprechend dem Verlauf einer zu schweißenden Schweißnaht geformt und angeordnet ist. Darüber hinaus weist er eine Kanalbreite b auf, die an die Schweißnahtbreite angepasst ist, sowie eine in z-Richtung verlaufende Kanallänge I. Für die Realisierung einer Relativbewegung zwischen Aufnahme 1 und Laserstrahlquelle 30 in y-Richtung ist eine Transporteinrichtung 6 vorgesehen.

Die in Fig. 1 dargestellte Aufnahme 1 ist zur Realisierung der Relativbewegung zwischen Laserstrahlquelle 30 und Aufnahme 1 und damit auch des Werkstücks 20, in y-Richtung (Verfahrrichtung) fest mit der Transporteinrichtung 6 verbunden, wobei es für die erfindungsgemäße Herstellung einer Schweißnaht nicht von Bedeutung ist, ob die Laserquelle 30 und/oder die Aufnahme 1 bewegt werden.

Von oben in die Aufnahme 1 eingelegte, das Werkstück 20 bildende, großflächige Werkstückteile 21 und 22, werden durch lagesichernde Mittel wie Auflagen, Anschläge, Vertiefungen oder andere formschlüssige Elemente in x-, y- und z-Richtung zueinander und gegenüber der Vorrichtung positioniert. Die Werkstückteile 21, 22 haben dabei eine typische Abmessung von bis zu einem Meter Breite in x-Richtung und einer nur vom Bewegungsraum der Transporteinrichtung 6 begrenzten Länge in y-Richtung.

In einem Abstand 2 zur Aufnahme 1 ist in z-Richtung über der Aufnahme 1 die Laserquelle 30 angeordnet. Die Laserquelle 30 besteht aus einer Vielzahl einzeln ansteuerbarer Laserstrahlemitter 31, insbesondere Hochleistungsdiodenlaser-Modulen (im Folgenden als HLDL-Module bezeichnet), wobei die einzelnen Laserstrahlemitter 31 ein in x-Richtung orientiertes Linienarray bilden und mittels der Speicher- und Steuereinheit 7 und den Lasernetzteilen 8 betrieben werden. Die von der Laserstrahlquelle 30 ausgehenden Laserstrahlen 40 sind mit ihrer Abstrahlrichtung in z-Richtung auf das Werkstück 20 gerichtet. Da in der Vorrichtung keine weitere strahlformende Optik vorgesehen ist, weisen die aus der zum Linienarray geformten Laserstrahlquelle 30 austretende Laserstrahlen 40 eine den Abstrahlwinkeln der Laserstrahlemitter 31 entsprechende Divergenz auf. Der Abstand 2 zwischen der Laserstrahlquelle 30 und dem Werkstück 20 ist so eingestellt, dass es im Wirkbereich 41 der Laserstrahlen 40 zu einer teilweisen Überlagerung der aus den einzelnen Laserstrahlemittern 31 austretenden Laserstrahlen 40 in x-Richtung kommt.

Im Falle eines gleichzeitigen Betriebs aller einzelnen Laserstrahlemitter 31 weisen die aus dem Linienarray austretenden Laserstrahlen 40 in der Summe die Form eines divergenten Laservorhangs auf, welcher in z-Richtung auf Höhe der Aufnahme 1 einen linienförmigen Wirkbereich 41 mit einem Intensitätsprofil einer linienförmigen Gaußverteilung zeigt. Die Divergenz des Laservorhangs entspricht der Summe der Divergenzen der einzelnen HLDL-Module.

Innerhalb des Linienarrays der Laserstrahlquelle 30 sind die einzelnen HLDL-Module so ausgerichtet, dass deren slow-axis in x-Richtung und deren fast-axis in y-Richtung verläuft. Der Laserstrahl 40 ist in Richtung der fast-axis mittels Zylinderlinsen auf einen Divergenzwinkel von ca. 0,5° kollimiert. In Richtung der slow-axis weißt der Laserstrahl 40 einen Divergenzwinkel von ca. 3,5° auf.

Der zwischen der Laserstrahlquelle 30 und dem Werkstück 20 angeordnete Homogenisierer 50 besteht aus einem Träger 52, der in x-y-Richtung so dimensioniert ist, dass er das in der Aufnahme 1 positionierte Werkstück 20 gegenüber dem Wirkbereich 41 der Laserstrahlen 40 abschirmen kann. Zur Erzeugung einer Schweißnaht ist in den Träger 52 ein in z-Richtung durchgängiger, ringförmiger Reflexionskanal 51 mit einer Kanallänge I und einer Kanalbreite b eingebracht, durch den die Laserstrahlen 40 auf damit freigegebene Bereiche auf das Werkstück 20 treffen können. Die Lage und der Kanalquerschnitt QS des Reflexionskanals 51 in x-y-Richtung entspricht der Lage und der Form einer herzustellenden Schweißnaht auf einem in der Aufnahme 1 positionierten Werkstück 20.

Der Reflexionskanal 51 weist in seinem Kanalquerschnitt QS Abschnitte auf in denen die Kanalwandflächen 53 parallel zur x- oder zur y-Richtung verlaufen. Unter der Voraussetzung einer konstant gehaltenen Kanalbreite b werden die Laserstrahlen 40 aufgrund der in x- und y-Richtung unterschiedlichen Divergenzwinkel über Abschnitte, die nur in x-Richtung verlaufen schlechter homogenisiert als über Abschnitte die nur in y-Richtung verlaufen. In den in y-Richtung orientierten Abschnitten des Reflexionskanals 51 wird eine bessere Homogenisierung durch einen höheren Anteil an mehrfach reflektierten Laserstrahlen 40 erreicht als in den in x-Richtung orientierten Abschnitten. Dieser Unterschied könnte durch eine entsprechende Anpassung der Breite des Reflexionskanals 51 ausgeglichen werden, was allerdings zu örtlich unterschiedlichen Schweißnahtbreiten führen würde. Die Kanalbreite b und damit die Schweißnahtbreite richtet sich aber vorrangig nach den Erfordernissen des Werkstücks 20. Deswegen ist in diesem Ausführungsbeispiel die Laserstrahlquelle 30 so ausgerichtet, dass deren Abstrahlrichtung um einen Einfallswinkel um die x-Achse gegenüber der z-Achse verkippt verläuft. Dadurch erreicht ein geringerer Anteil der mit kleinerem Divergenzwinkel versehenen Laserstrahlen 40 der fast-axis die Oberfläche des Werkstücks 20 auf direktem Weg. Außerdem nimmt durch einen erhöhten Einfallswinkel die Anzahl der Reflexionen an den Kanalwandflächen 53 zu.

Je nach Verlauf der Schweißnaht kann die Laserstrahlquelle 30 gegenüber der z-Achse um die x- oder/und y-Achse verkippt angeordnet sein oder auch während der Bearbeitung angeordnet werden, wozu eine mit der Steuer- und Speichereinheit 7 verbundene Kippeinrichtung vorhanden ist.

Zur Einhaltung einer konstanten Schweißnahtposition auf dem Werkstück 20 weisen Aufnahme 1 und Homogenisierer 50 zueinander eine feste Lagebeziehung in x-y-Richtung auf. Diese kann z. B. durch positionssichernde Mittel wie Säulenführungsgestelle, Gleitschienen oder Ähnlichem realisiert werden, an denen die Aufnahme 1 und der Homogenisierer 50 befestigt sind.

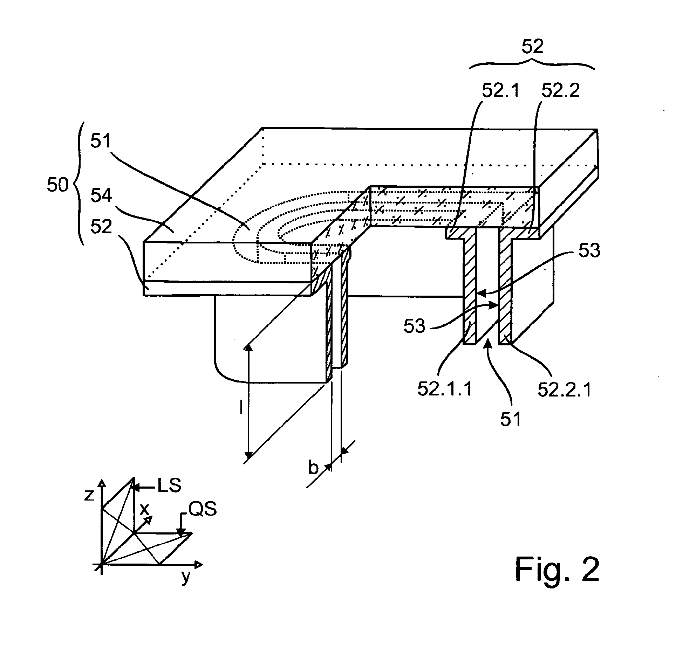

In Fig. 2 ist der Homogenisierer 50 in einer detailreicheren Ansicht dargestellt.

Der Träger 52 besteht aus zwei Elementen, 52.1, 52.2, die miteinander einen Zwischenraum einschließen, durch welchen der Reflexionskanal 51 gebildet wird. Um eine unterbrechungsfreie Schweißnaht herstellen zu können und eine Fixierung der durch den Reflexionskanal 51 voneinander getrennten Elemente des Trägers 52.1, 52.2 zu erreichen, ist eine für die Laserstrahlen 40 transparente und mechanisch stabile Verbindungsplatte 54 vorgesehen, die hier als Glasplatte ausgeführt ist. Die Elemente des Trägers 52.1, 52.2 sind besonders vorteilhaft mittels Klebung an der dem Werkstück 20 zugewandten Seite der Verbindungsplatte 54 befestigt. Eine Herstellung des Homogenisierers 50 ist damit ohne großen Montageaufwand und sehr schnell realisierbar. Zur Bereitstellung einer ausreichend großen Klebefläche sind an den Elementen des Trägers 52.1, 52.2, auf einer der Verbindungsplatte 54 zugewandten Seite, Planflächen ausgeführt. Zur Bildung des Reflexionskanals 51 mit einer Kanallänge I sind an den Elementen des Trägers 52.1, 52.2 hülsenförmige dünne Wände 52.1.1, 52.2.1 ausgebildet.

Der Träger 52 kann auch als eine massive Planplatte mit einer Dicke gleich der Kanallänge I ausgebildet sein, was allerdings zu einem unnötig hohen Materialverbrauch und unnötig hohen Gewicht führt.

Eine Homogenisierung der Laserstrahlen 40 im Homogenisierer 50 erfolgt durch eine Durchmischung der Laserstrahlen 40 durch Mehrfachreflexion im Reflexionskanal 51 an den Kanalwandflächen 53. Damit die Durchmischung durch Mehrfachreflexion erfolgen kann, muss der Reflexionskanal 51 ein bestimmtes Größenverhältnis zwischen Kanallänge I und Kanalbreite b aufweisen und wenigstens ein Teil des Laserstrahls 40 muss unter einem bestimmten Winkel in den Reflexionskanal 51 einfallen.

Das Größenverhältnis ist in Abhängigkeit von der zu erzeugenden Breite der Schweißnaht gewählt. Im hier beschriebenen Ausführungsbeispiel ist der Reflexionskanal 51 z. B. mindestens 70 mm lang und 10 mm breit.

Die dem Werkstück 20 gegenüberstehenden Stirnflächen der Wände des Trägers 52.1.1, 52.2.1 sind so ausgeführt, dass sie in Kontakt mit der Oberfläche des transmittierenden Werkstückteils 21 stehen können, womit sie die Breite der Schweißnaht scharf begrenzen.

Weiterhin können die Wände des Trägers 52.1.1, 52.2.1 dazu benutzt werden, die beiden Werkstückteile 21 und 22 durch eine über die Aufnahme 1 oder den Homogenisierer 50 wirkende Andruckkraft, während des Schweißvorganges zu beaufschlagen, indem sie unter Druck in Kontakt mit der Oberfläche des transmittierenden Werkstücks 21 stehen.

Die Stirnflächen können auch in einem geringen Abstand zum Werkstück 20 angeordnet sein, wodurch allerdings mit zunehmend größer werdendem Abstand 2 die Ränder der Schweißnaht unscharf werden, d. h. hier trifft der Laserstrahl 40 mit einer zu den Rändern hin abfallenden Strahlleistung auf. Bei in z-Richtung gewölbten Werkstücken 20 sind die Wände des Trägers 52.1.1, 52.2.1 vorteilhaft ortsabhängig unterschiedlich lang ausgeführte, sodass die Kanallänge I variiert, wobei die Längendifferenz zwischen größter und kleinster Länge nur so groß sein darf, dass bei einer längsten Kanallänge I die auf das Werkstück 20 auftreffende Strahlleistung noch ausreichend ist, um eine Schmelze zu bilden und bei kleinster Kanallänge I noch eine hinreichend gute Homogenisierung erfolgt.

Die in z-Richtung in den Reflexionskanal 51 eintretenden Laserstrahlen 40 der divergenten und in y-Richtung angewinkelten Laserstrahlquelle 30 treffen wenigstens anteilig auf die Kanalwandflächen 53 auf und werden an ihnen reflektiert. Mit zunehmendem Einfallswinkel der Laserstrahlen 40 nimmt die Anzahl der Reflexionen zu, sodass der höherdivergente Teil der Laserstrahlen 40 mehrfach zwischen den Kanalwandflächen 53 hin und her reflektiert wird, bevor er die Oberfläche des Werkstücks 20 erreicht. Bei der Durchmischung von direkt auf das Werkstück 20 treffenden mit den an den Kanalwandflächen 55 reflektierten Teilen der Laserstrahlen 40 wird auf einfachste Weise, ohne Verwendung aufwändiger Optiken eine homogenisierte Leistungsdichteverteilung in der Schweißnaht erreicht.

Eine so hergestellte Schweißnaht weist über ihre gesamte Breite eine sehr homogene Verschmelzung der beiden Werkstückteile 21 und 22 auf. Dadurch kann die Festigkeit der Schweißnaht auch in ihren Randbereichen auf dem gleichen Niveau wie in der Schweißnahtmitte gehalten werden. Außerdem ist eine Schädigung der Oberflächen der Werkstückteile 21 und 22 durch auftretende Inhomogenitäten in der Leistungsdichteverteilung der Laserstrahlen 40 nahezu ausgeschlossen. Da der Schweißvorgang in einem Bewegungsablauf der Transporteinrichtung 6 durchgeführt werden kann, ergibt sich bei Bearbeitung insbesondere von großflächigen Werkstücke 20 ein enormer Zeitvorteil gegenüber der Bearbeitung mit einer Vorrichtung bei denen die Schweißnaht mit einem einzelnen Laserstrahlemitter 31 seriell abgefahren wird.

Durch die Homogenisierung wird die Vorrichtung außerdem unempfindlich gegenüber Schwankungen des Abstands 2, die z. B. bei Werkstücken 20 auftreten, welche vorrangig in x-y-Richtung ausgedehnt sind und zusätzlich über ihre x-y Ausdehnung einen Höhenunterschied in z-Richtung aufweisen. Es besteht somit keine Notwendigkeit den Abstand 2 entsprechend der Höhenunterschiede des Werkstücks 20 entlang der Schweißnaht nachzuführen.

Es ist energetisch von Vorteil, wenn die einzelnen Laserstrahlemitter 31 der Laserquelle 30 nur dann von der Speicher- und Steuereinheit 7 eingeschaltet werden, wenn sich diese während der Vorschubbewegung mit der Transporteinheit 6 über einem Reflexionskanal 51 befinden.

Bei der Verwendung von HLDL-Modulen als einzelne Laserstrahlemitter 31 ist es von Vorteil, wenn jeweils zwei Laserstrahlemitter 31 mit einem Lasernetzteil 8 verbunden sind und durch dieses betrieben werden. Das bedeutet, dass unabhängig davon, ob sich einer der beiden Laserstrahlemitter 31 gerade über einem Reflexionskanal 51 befindet, gleichzeitig auch der zweite vom entsprechenden Lasernetzteil 8 betriebene Laserstrahlemitter 31 geschaltet wird. Um den zweiten, in diesem Fall nicht benötigten Laserstrahlemitter 31 am Abstrahlen zu hindern, wird jedem der beiden von einem Netzteil betriebenen Laserstrahlemitter 31 mindestens ein wassergekühltes Festkörperrelais parallel geschaltet, sodass bei der Ansteuerung eines der Lasernetzteile 8 ein jeweils nicht benötigter Laserstrahlemitter 31 kurzgeschlossen werden kann. Im Gegensatz zu einer Lösung mit im Strahlengang angeordneten Shuttern, kann mit dieser Konfiguration die durchschnittliche Belastung der Laserstrahlemitter 31 verringert, der Kühlungsaufwand reduziert und der durchschnittliche Energieverbrauch gesenkt werden.

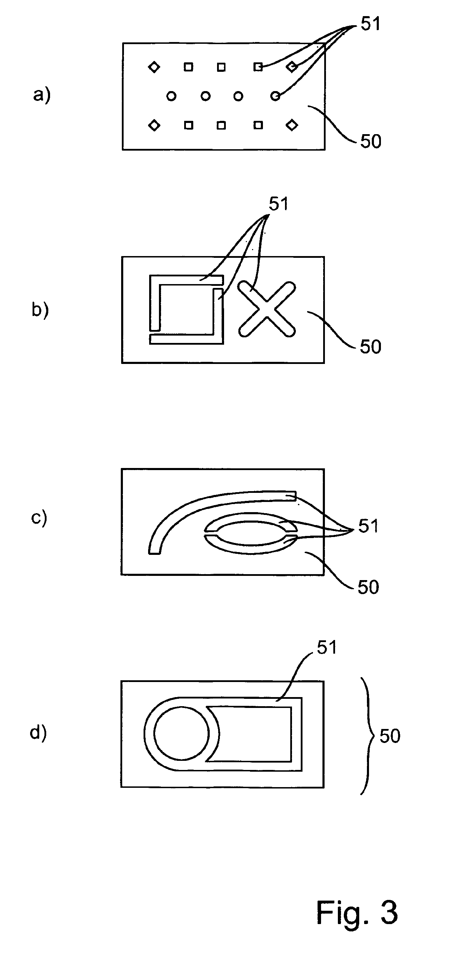

Reflexionskanäle 51 können, wie in Figur 3 an ausgewählten Beispielen dargestellt, in vielfältigen Anordnungen und Kanalquerschnitten QS in den Homogenisierer 50 eingebracht sein, um entsprechende Schweißnähte erzeugen zu können. Bei den in Figur 3a dargestellten Reflexionskanälen 51 handelt es sich um eine Sonderform, nämlich um Reflexionskanäle 51 mit einem ausgedehnten punktförmigen Kanalquerschnitt QS, wie sie als Strahlrohre aus dem Stand der Technik bekannt sind. Sie können eine beliebig geformte Außenkontur mit einer maximalen Ausdehnung in der Größe des zulässigen Aspektverhältnisses aufweisen. Hiermit sind keine Schweißnähte sondern nur Schweißpunkte in einem Muster gleich der Anordnung der Strahlrohre erzeugbar. Die Vorteile der erfindungsgemäßen Vorrichtung kommen hier nur teilweise zum Tragen, was jedoch die Verwendung der Vorrichtung nicht ausschließt.

Ebenso kann die Vorrichtung verwendet werden, um eine linienförmige Schweißnaht zu erzeugen, deren Verlauf lediglich in x- oder y-Richtung vorgegeben ist. Auch hier kommen die Vorteile der erfindungsgemäßen Vorrichtung nicht voll zum Tragen.

In Figur 3b und 3c sind Beispiele für Reflexionskanäle 51 mit einem gerad- oder krummlinigen Kanalquerschnitt QS gezeigt. Kennzeichnend ist hier, dass die Linienform der Reflexionskanäle 51 keine sich geschlossen Linienform darstellt, weshalb wenigstens stegförmige Materialverbindungen erhalten bleiben, sodass der Träger 52, so wie auch in dem in Fig. 3a dargestellten Beispiel, aus nur einem plattenförmigen Element besteht. Eine transparente Verbindungsplatte 54 ist in diesen Fällen nicht notwendig. Je nach Ausdehnung, Kanalquerschnitt QS und Anzahl der eingebrachten Reflexionskanäle 51 können in den Zwischenräumen zwischen den Reflexionskanälen 51 gewichtsparende Durchbrüche in dem Träger 52 vorgesehen sein.

So wie bereits im ersten Ausführungsbeispiel beschrieben, ist in Figur 3d der Kanalquerschnitt QS des Reflexionskanals 51 eine in sich geschlossene Linie, womit der Reflexionskanal 51 ringförmig ausgebildet ist. Kennzeichnend ist hier, dass der Träger 52 aus mindestens zwei, voneinander getrennten Elementen 52.1, 52.2 besteht. Zur Ausrichtung und Fixierung der Elemente 52.1, 52.2 ist hier die Verwendung einer Verbindungsplatte 54 zwingend erforderlich.

Eine besonders vorteilhafte Anwendung dieser Vorrichtung ergibt sich, wenn das transmittierende Werkstückteil 21 aus einem dünnwandigen, flachen Material, beispielsweise einer Folie, besteht und das absorbierende Werkstückteil 22 einen schalenartigen Aufbau mit dünnwandigen, in z-Richtung aufrecht stehenden Wandstrukturen aufweist, auf denen die Folie verschweißt werden soll. Bei einem üblicherweise verwendeten Verfahren zum Verschweißen so gearteter Werkstückteile wird eine, das komplette Werkstück 20 überdeckende, beheizte Platte auf das obere Werkstückteil 21 aufgepresst, sodass sich durch die Andruckkraft und den Wärmeeintrag von der beheizten Platte eine Verschmelzung zwischen den beiden Werkstückteilen 21 und 22 ergibt. Die dünnwandigen Wandstrukturen des Werkstückteils 22 müssen dabei so stabil gestaltet sein, dass sie die Andruckkraft der beheizten Platte aufnehmen können. Die hierzu erforderliche Stabilität kann dabei ausschließlich über die Wandstärke der Wandstrukturen erreicht werden.

Durch Verwendung der erfindungsgemäßen Vorrichtung kann die Wandstärke der Wandstrukturen auf ein Minimum reduziert werden, da die Wandstrukturen nicht mehr dem Gegendruck der beheizten Platte standhalten müssen. Stattdessen wird das Werkstückteil 21 vor dem Verschweißen, unter einer Vorspannung in x- und y-Richtung, an dessen Rändern aufgenommen und mit leichtem Andruck über das schalenförmige Werkstückteil 22 gespannt, sodass die Werkstückteile 21, 22 in Kontakt zueinander stehen. Anschließend erfolgt der Schweißvorgang. Trotzdem die sehr dünnwandigen Wandstrukturen des Werkstückteils 22 nur sehr kleine Flächen zur Herstellung der Schweißnaht aufweisen, kann durch die Homogenisierung eine mit der Heizplatte erreichte, vergleichbare Festigkeit der Schweißverbindung erreicht werden. Dadurch kann Material eingespart werden und außerdem die Effizienz von Werkstücken 20, deren Funktionalität eine möglichst dünne Wandstruktur erfordern, gesteigert werden.

In einem weiteren Ausführungsbeispiel zeigt ein Längsschnitt LS nicht wie bei den bisherigen Ausführungsbeispielen zwei zueinander parallel angeordnete Kanalwandflächen (Figur 2) sondern die Kanalwandflächen 53 laufen aufeinander zu, das heißt sie sind um einen Winkel zur z-Richtung verkippt angeordnet, sodass die zur Laserstrahlquelle 30 zeigende Öffnung des Reflexionskanals 51 größer ist, als die zum Werkstück 20 weisende. Dadurch kann zum einen die Anzahl der Reflexionen erhöht und zum anderen die Öffnung des Kanals werkstückseitig verringert werden, um eine schmalere Schweißnaht zu erzeugen. Der Größe des Winkels sind in Abhängigkeit von der Kanallänge I und Kanalbreite b dadurch Grenzen gesetzt, dass die Reflexionen nicht dazu führen dürfen, dass der Laserstrahl 40 zurück reflektiert wird.

In einer weiteren speziellen Ausführung ist die Laserstrahlquelle 30 so ausgerichtet, dass deren Abstrahlrichtung auch in Richtung der slow-axis unter einem Neigungswinkel zur z-Achse verläuft. In diesem Fall schließt die Abstrahlrichtung mit den in y-Richtung ausgerichteten Kanalwandflächen 53 einen Neigungswinkel ein. Das kann erreicht werden, indem einzelne oder alle einzelnen Laserstrahlemitter 31 der Laserstrahlquelle 30 um einen Neigungswinkel um die y-Achse zur z-Achse verkippt werden. Somit kann auch in den in y-Richtung verlaufenden Abschnitten eines Reflexionskanals 51 mit ringförmigem Kanalquerschnitt QS eine weitere Verbesserung der Homogenisierung erreicht werden. Jedes Verkippen der Laserstrahlemitter 31 aus einer senkrecht zum Homogenisierer 50 ausgerichteten Position reduziert gleichzeitig die vom Homogenisierer 50 zurückreflektierten Laserstrahlen 40 und damit die thermische Belastung bzw. den Aufwand zur Kühlung der Laserstrahlquelle 30.

### Bezugszeichenliste

- 1: Aufnahme
- 2: Abstand

- 20: Werkstück
- 21: transmittierendes Werkstückteil
- 22: absorbierendes Werkstückteil

- 30: Laserstrahlquelle
- 31: Laserstrahlemitter

- 40: Laserstrahlen
- 41: Wirkbereich

- 50: Homogenisierer
- 51: Reflexionskanal
52 Träger
52.1, 52.2 Element des Trägers
52.1.1, 52.2.1 Wand des Trägers
- 53: Kanalwandfläche
- 54: Verbindungsplatte

- 6: Transporteinrichtung
- 7: Speicher- und Steuereinheit
- 8: Lasernetzteil

- b: Kanalbreite
- I: Kanallänge
- QS: Kanalquerschnitt
- LS: Längsschnitt

## Patentansprüche

1. Vorrichtung zum Verbinden zweier Werkstückteile (21, 22) zu einem Werkstück (20) über eine wenigstens zweidimensional verlaufende Schweißnaht durch Durchstrahlschweißen,
mit einer Aufnahme (1), die dazu ausgelegt ist zwei in x-y-Richtung flächig ausgedehnte Werkstückteile (21, 22) zueinander in x-, y- und z-Richtung eines kartesischen Koordinatensystems zu positionieren,
mit einer auf die Aufnahme (1) und damit auf in diese positionierten Werkstückteile (21, 22) mit ihrer Abstrahlrichtung ausgerichteten Laserstrahlquelle (30), bestehend aus einer Vielzahl von einzeln ansteuerbaren Laserstrahlemittern (31), die gemeinsam ein Linienarray bilden, welches in x-Richtung ausgerichtet ist,
mit einer Transporteinrichtung (6) zum relativen Transportieren der Laserstrahlquelle (30) zur Aufnahme (1) in y-Richtung,
sowie mit einer Speicher- und Steuereinheit (7) zum ortsaufgelösten Betreiben der Laserstrahlemitter (31) in Abhängigkeit von der Position der Aufnahme (1) in y-Richtung, **dadurch gekennzeichnet,**
**dass** der Laserstrahlquelle (30) in Abstrahlrichtung ein Homogenisierer (50) nachgeordnet ist, der einen Träger (52) umfasst, in dem wenigstens ein Reflexionskanal (51) vorgesehen ist, mit einem Kanalquerschnitt (QS) der an den Verlauf der Schweißnaht angepasst ist und einer Kanalbreite (b), die an die Breite der Schweißnaht angepasst ist, sowie einer Kanallänge (I) in z-Richtung und
**dass** der Reflexionskanal (51) sich gegenüberliegende reflektierende Kanalwandflächen (53) aufweist, an denen wenigstens ein Teil wenigstens eines von der Laserstrahlquelle (30) kommenden Laserstrahls (40) mehrfach hin und her reflektiert wird.

2. Vorrichtung nach Anspruch 1 **dadurch gekennzeichnet,**
**dass** der Kanalquerschnitt (QS) des Reflexionskanals (51) eine ringförmig, geschlossene Struktur darstellt und die Kanalwandflächen (53) durch mindestens zwei Elemente des Trägers (52.1, 52.2) gebildet sind.

3. Vorrichtung nach Anspruch 1 und 2 **dadurch gekennzeichnet,**
**dass** zur Verbindung der Elemente des Trägers (52.1, 52.2) eine stabile transparente Verbindungsplatte (54) vorgesehen ist, an welcher die Elemente des Trägers (52.1, 52.2) befestigt sind.

4. Vorrichtung nach Anspruch 3, **dadurch gekennzeichnet,**
**dass** die Elemente des Trägers (52.1, 52.2) an die Verbindungsplatte (54) geklebt sind.

5. Vorrichtung nach Anspruch 1, **dadurch gekennzeichnet, dass** die Kanalwandflächen (53) sich parallel gegenüberstehend angeordnet sind.

6. Vorrichtung nach Anspruch 1 **dadurch gekennzeichnet,**
**dass** die Kanalwandflächen (53) aufeinander zulaufend angeordnet sind.

7. Vorrichtung nach Anspruch 1 **dadurch gekennzeichnet,**
**dass** die Laserstrahlquelle (30) so ausgerichtet ist, dass die Abstrahlrichtung mit den Kanalwandflächen (53) einen Winkel einschließt.

8. Vorrichtung nach Anspruch 2, **dadurch gekennzeichnet,**
**dass** die Elemente des Trägers (52.1, 52.2) hülsenförmige Wände (52.1.1, 52.2.1), aufweisen, die gemeinsam den wenigstens einen Reflexionskanal (51) mit einer Kanallänge (I) bilden.

9. Vorrichtung nach Anspruch 8, **dadurch gekennzeichnet,**
**dass** die Wände (52.1.1, 52.2.1) der Aufnahme (1) zugewandte Stirnflächen aufweisen, die an einem in der Aufnahme (1) positionierten Werkstück (20) zur Anlage gebracht werden können.

10. Vorrichtung nach Anspruch 8 oder 9, **dadurch gekennzeichnet,**
**dass** die Wände des Trägers (52.1.1, 52.2.1) ortsabhängig mit variierender Kanallänge (I) ausgeführt sind, um den Homogenisierer (50) an ein unebenes Werkstück (20) anpassen zu können.

## Claims

1. Device for joining two workpiece parts (21, 22) to form a workpiece (20) along a weld extending in at least two dimensions by transmission welding, having a receptacle (1) which is dimensioned such that two workpiece parts (21, 22) extending in a planar manner in X and Y direction are positioned relative to one another in the X direction, Y direction and Z direction of a Cartesian coordinate system, having a laser beam source (30) which is aligned in the radiating direction thereof on the receptacle (1) and, therefore, on workpiece parts (21, 22) positioned therein, which laser beam source (30) comprises a plurality of individually controllable laser beam emitters (31) which collectively form a line array which is oriented in X direction, having a transporting device (6) for transporting the laser beam source (30) relative to the receptacle (1) in Y direction, and having a storage-and-control unit (7) for spatially resolved operation of the laser beam emitters (31) depending on the position of the receptacle (1) in Y direction, **characterized in that** a homogenizer (50) is arranged downstream of the laser beam source (30) in the radiating direction, which homogenizer (50) has a carrier (52) in which is provided at least one reflection channel (51) with a channel cross section (QS) which is adapted to the course of the weld and a channel width (b) which is adapted to the width of the weld and a channel length (I) in Z direction, and **in that** the reflection channel (51) has oppositely located reflecting channel wall surfaces (53) at which at least a portion of at least one laser beam (40) coming from the laser beam source (30) is repeatedly reflected back and forth.

2. Device according to claim 1, **characterized in that** the channel cross section (QS) of the reflection channel (51) has an annular closed structure, and the channel wall surfaces (53) are formed by at least two elements of the carrier (52.1, 52.2).

3. Device according to claims 1 and 2, **characterized in that** a stable transparent connection plate (54) is provided for the connection of the elements of the carrier (52.1, 52.2), the elements of the carrier (52.1, 52.2) being fastened thereto.

4. Device according to claim 3, **characterized in that** the elements of the carrier (52.1, 52.2) are glued to the connection plate (54).

5. Device according to claim 1, **characterized in that** the channel wall surfaces (53) are arranged in parallel facing relation to one another.

6. Device according to claim 1, **characterized in that** the channel wall surfaces (53) are arranged so as to converge.

7. Device according to claim 1, **characterized in that** the laser beam source (30) is oriented in such a way that the radiating direction encloses an angle with the channel wall surfaces (53).

8. Device according to claim 2, **characterized in that** the elements of the carrier (52.1, 52.2) have sleeve-shaped walls (52.1.1, 52.2.1) which collectively form the at least one reflection channel (51) having a channel length (I).

9. Device according to claim 8, **characterized in that** the walls (52.1.1, 52.2.1) have end faces which face the receptacle (1) and which can be brought into contact with a workpiece (20) positioned in the receptacle (1).

10. Device according to claim 8 or 9, **characterized in that** the walls of the carrier (52.1.1, 52.2.1) are constructed with a channel length (I) which varies in a location-dependent manner to allow the homogenizer (50) to be adapted to an irregular workpiece (20).

## Revendications

1. Dispositif de liaison de deux parties de pièce (21, 22) pour former une pièce (20) le long d'une soudure s'étendant dans au moins deux dimensions au moyen d'un soudage par transmission, ayant un réceptacle (1) dimensionné de telle façon que deux parties de pièce (21, 22) s'étendant d'une manière plane dans la direction X et Y sont positionnées relativement l'un par rapport à l'autre dans la direction X, la direction Y et la direction Z d'un système de coordonnées cartésiennes, ayant une source de rayon laser (30) qui est alignée dans sa direction de rayonnement sur le réceptacle (1) et, alors, sur des parties de pièce (21, 22) positionnées la-dedans, la source de rayon laser (30) comprenant une pluralité d'émetteurs de rayon laser (31) susceptibles d'être commandé individuellement qui conjointement forment un agencement en ligne orienté dans la direction X, ayant un dispositif de transport (6) pour transporter la source de rayon laser (30) relativement au réceptacle (1) dans la direction Y, et ayant une unité de mémoire et de commande (7) pour une opération en résolution spatiale des émetteurs de rayon laser (31) selon la position du réceptacle (1) dans la direction Y, **caractérisé en ce qu'**un homogénéisateur (50) est disposé en aval de la source de rayon laser (30) dans la direction de rayonnement, l'homogénéisateur (50) ayant un support (52) pourvu d'au moins un canal de réflexion (51) avec une section transversale de canal (QS) qui est adaptée à la ligne de la soudure et une largeur de canal (b) qui est adaptée à la largeur de la soudure et une longueur de canal (I) dans la direction Z, et **en ce que** le canal de réflexion (51) a des surfaces de paroi de canal réfléchissantes opposées (53), sur lesquelles au moins une partie d'au moins un rayon laser (40) sortant de la source de rayon laser (30) est réfléchie d'avant en arrière plusieurs fois.

2. Dispositif selon la revendication 1, **caractérisé en ce que** la section transversale de canal (QS) du canal de réflexion (51) a une structure annulaire fermée, et les surfaces de paroi de canal (53) sont formées par au moins deux éléments du support (52.1, 52.2).

3. Dispositif selon les revendications 1 et 2, **caractérisé en ce qu'**une plaque de liaison stable et transparente (54) est fournie pour la liaison des éléments du support (52.1, 52.2), les éléments du support (52.1, 52.2) étant y fixés.

4. Dispositif selon la revendication 3, **caractérisé en ce que** les éléments du support (52.1, 52.2) sont collés sur la plaque de liaison (54).

5. Dispositif selon la revendication 1, **caractérisé en ce que** les surfaces de paroi de canal (53) sont disposées parallèlement et face à face l'un par rapport à l'autre.

6. Dispositif selon la revendication 1, **caractérisé en ce que** les surfaces de paroi de canal (53) sont disposées en convergeant l'un vers l'autre.

7. Dispositif selon la revendication 1, **caractérisé en ce que** la source de rayon laser (30) est alignée de telle façon que la direction de rayonnement forme un angle avec les surfaces de paroi de canal (53).

8. Dispositif selon la revendication 2, **caractérisé en ce que** les éléments du support (52.1, 52.2) ont des parois en forme de douille (52.1.1, 52.2.1) qui conjointement forment ledit au moins un canal de réflexion (51) ayant une longueur de canal (I).

9. Dispositif selon la revendication 8, **caractérisé en ce que** les parois (52.1.1, 52.2.1) ont des faces frontales qui sont orientées face au réceptacle (1) et qui peuvent être mis en contact avec une pièce (20) positionnée dans le réceptacle (1).

10. Dispositif selon la revendication 8 ou 9, **caractérisé en ce que** les parois du support (52.1.1, 52.2.1) sont construit avec une longueur de canal (I) qui varie selon le lieu pour permettre à l'homogénéisateur (50) d'être adapté à une pièce irrégulière (20).
